(19) Europäisches Patentamt
European Patent Office
Office européen des brevets

(11) Veröffentlichungsnummer: **0 070 534 B1**

# (12) EUROPÄISCHE PATENTSCHRIFT

(45) Veröffentlichungstag der Patentschrift: **10.10.84**

(51) Int. Cl.³: **C 07 F 9/38**, B 03 D 1/00

(21) Anmeldenummer: **82106406.0**

(22) Anmeldetag: **16.07.82**

(54) **3-Alkoxipropylenimino-bis(methylenphosphonsäuren) und deren Salze, Verfahren zu deren Herstellung und deren Verwendung.**

(30) Priorität: **21.07.81 DE 3128755**

(43) Veröffentlichungstag der Anmeldung: **26.01.83 Patentblatt 83/4**

(45) Bekanntmachung des Hinweises auf die Patenterteilung: **10.10.84 Patentblatt 84/41**

(84) Benannte Vertragsstaaten: **BE CH DE FR GB IT LI NL SE**

(56) Entgegenhaltungen:
**GB - A - 1 110 643**
**SU - A - 605 638**
**US - A - 2 917 528**

(73) Patentinhaber: **HOECHST AKTIENGESELLSCHAFT, Postfach 80 03 20, D-6230 Frankfurt am Main 80 (DE)**

(72) Erfinder: **Morawietz, Hans-Joachim, Dr., Kuckucksweg 2, D-6233 Kelkheim (Taunus) (DE)**
Erfinder: **Hoffmann, Erich, Dr., Erich-Bauer-Strasse 9, D-6093 Flörsheim am Main (DE)**
Erfinder: **Hanauer, Johann, Dr., Rossertstrasse 3, D-6239 Kriftel (DE)**
Erfinder: **Bauer, Kurt, Dessauer Weg 13, D-6092 Kelsterbach (DE)**

**EP 0 070 534 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue 3-Alkoxipropylenimino-bis-(methylenphosphonsäuren) sowie deren Salze, ein Verfahren zu deren Herstellung und deren Verwendung insbesondere als Flotationshilfsmittel speziell bei Zinnstein.

Wie bekannt, ist die Flotation (Schaumschwimmaufbereitung) ein weit verbreitetes Sortierverfahren für mineralische Rohstoffe, bei dem das oder die wertvollen Minerale von den wertlosen getrennt werden. Die Vorbereitung des mineralischen Rohstoffes zur Flotation erfolgt durch trockene, vorzugsweise aber nasse Vermahlung des vorzerkleinerten Erzes auf eine geeignete Korngröße, die sich einerseits nach dem Verwachsungsgrad des Erzes, d. h. nach der Größe der Einzelkörper im Mineralverbund, aber auch nach der noch zu flotierenden Korngröße richtet, die je nach Mineral sehr verschieden sein kann. Für Zinnerze ist es allgemein notwendig, auf etwa 100% kleiner als 150–100 µm aufzumahlen. Die Vorbereitung des Erzes zur Flotation wird, sofern es nicht naß gemahlen worden ist, mit seiner Suspendierung in Wasser fortgesetzt. Bei Erzen, die hohe Anteile an Feinstschlämmen aufweisen, die zum Beispiel von Tonmineralen (Montmorillonit, Kaolinit, Talk usw.) herrühren können, kann es als sehr wichtiger Teil der Vorbereitung notwendig sein, diese Feinstschlämme (<5–10 µm) durch Dekantieren in Hydroseparatoren oder mittels Hydrozyklonen abzuscheiden, da sie die Selektivität des Flotationsprozesses sehr negativ beeinflussen und seine Wirtschaftlichkeit durch extrem hohen Reagenzienverbrauch zunichte machen können. Dies gilt auch für viele Zinnerze.

Ein weiterer Schritt der Flotationsvorbereitung ist die Zugabe und das Einwirkenlassen der Flotationsreagenzien, das von unterschiedlicher Dauer sein kann. Dies gilt vor allem für die Hydrophobierung des zu flotierenden Minerals durch einen sogenannten Sammler oder einer Kombination aus mehreren Sammlern. Viele Sammler für nichtsulfidische Minerale (Oxhydril-Sammler) entwickeln wegen ihres Tensidcharakters selbst einen zur Flotation geeigneten Schaum. Bei anderen Erzen kann es notwendig sein, den Schaum durch spezielle Reagenzien, Schäumer genannt, zu entwickeln oder ihn in geeigneter Weise zu modifizieren. Als Flotationsschäumer sind Alkohole mit vier bis zehn Kohlenstoffatomen in der Kohlenwasserstoffkette, Polypropylenglykole, Polyethylen- oder Polypropylenglykolether, Terpenalkohole (Pine Oils) und Kresylsäuren bekannt. Soweit erforderlich, müssen auch modifizierende Reagenzien, wie Regler für den das Flotationsergebnis oftmals maßgebend beeinflussenden pH-Wert, Aktivatoren für das im Schaum zu gewinnende Mineral oder Drücker für die im Schaum unerwünschten Minerale und eventuell auch Dispergatoren zugegeben werden.

Da die erfindungsgemäßen Verbindungen in erster Linie als Sammler eingesetzt werden, sei hier noch erwähnt, daß sie die Aufgabe haben, die Wertminerale zu hydrophobieren, damit diese sich an die in der Trübe aufsteigenden Luftblasen anheften können, mit deren Hilfe sie an die Trübeoberfläche transportiert werden, um dort in dem gebildeten Schaum festgehalten und gesammelt zu werden. Das Abstreifen des mineralisierten Schaums von der Trübeoberfläche vollzieht die Abtrennung der wertvollen von den wertlosen Mineralien.

Es gehört weiterhin zum Stand der Technik, daß Zinnstein mit Hilfe der Flotation von wertlosen Mineralen abgetrennt werden kann, wozu man sich je nach Erztyp verschiedener Sammlerreagenzien bedient. Für Erze, die Gangartminerale enthalten, die von anionischen Oxhydril-Sammlern nicht hydrophobiert werden, genügen meistens schon Monocarbonsäuren, speziell ungesättigte, langkettige Fettsäuren (zum Beispiel Tallöle), Fettalkylsulfate oder -sulfonate und Mono-/Di-Phosphorsäureester als Zinnstein-Sammler. Für schwieriger zu flotierende Erze, d. h. solche, die Gangartminerale mit hohem Flotationsvermögen enthalten, sind selektivere Produkte, wie Arson-, Phosphon-, Hydroxamsäuren sowie Sulfobernsteinsäurederivate und deren Salze, in Gebrauch.

Von den bekannten Sammlern haben sich als besonders selektiv, d. h. von spezifischer Affinität zum Zinnstein erwiesen:

para-Tolylarsonsäure 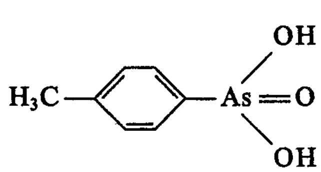 (I)

(siehe O. Neunhoeffer in Metall und Erz, 1943, S. 174, und FR-Pat. 881 935),

2-Phenylethylenphosphonsäure, auch als Styrolphosphonsäure bezeichnet, gilt als der zur Zeit selektivste Zinnstein-Sammler

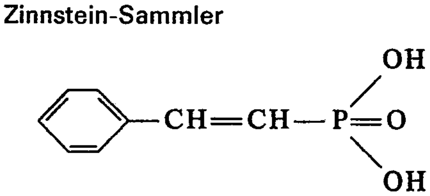 (II)

(siehe DE-Pat. 2 343 460 und DD-Pat. 76 974),

Tetranatrium-N-(1,2-dicarboxyethyl)-N-octadecyl-sulfosuccinamat

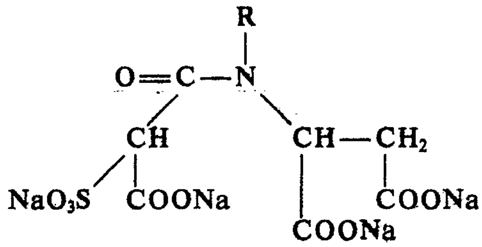

(III)

(siehe US-Pat. 2 438 092; GB-Pat. 1 110 643).

In der UdSSR-Patentschrift 605 638 werden ferner N-substituierte Imino-bis-methylenphosphonsäuren der allgemeinen Formel

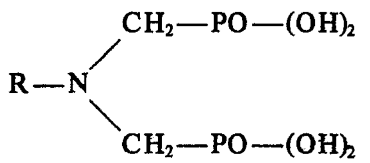

(IV)

mit R = Alkyl, Alkenyl, Cycloalkyl

als Zinnstein-Sammler vorgeschlagen.

Es wurde nun gefunden, daß sich das Ergebnis bei der Flotation von nicht-sulfidischen Erzen, insbesondere Zinnstein, sowohl bezüglich des Metall-Ausbringens im Konzentrat (Schaumprodukt) als auch hinsichtlich der Selektivität, die sich in den Metallgehalten der Konzentrate widerspiegelt, durch Verwendung der erfindungsgemäßen 3-Alkoxipropylenimino-bis(methylenphosphonsäure) und deren Salze deutlich verbessern läßt. Hervorzuheben sind vor allem der geringere spezifische Verbrauch, ausgedrückt in g/t, im Vergleich zu ähnlich selektiven Sammlern bzw. die höhere Selektivität.

Gegenstand der Erfindung sind 3-Alkoxipropylenimono-bis(methylenphosphonsäuren) der Formel

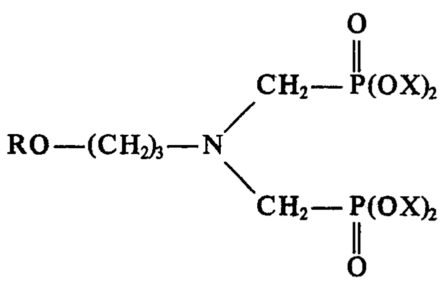

worin R einen geradkettigen oder verzweigten Alkylrest oder Alkenylrest mit jeweils 2 bis 20, vorzugsweise 2 bis 10 C-Atomen, Aryl, vorzugsweise Phenyl oder Aralkyl, vorzugsweise Benzyl, und X Wasserstoff, ein Alkalimetall-, Erdalkalimetall-, Ammonium-, Alkylammonium- oder Polyalkylenpolyammonium-ion, vorzugsweise ein Natrium-, Kalium- oder Ammonium-ion bedeutet.

Diese Verbindungen werden erhalten, indem man ein Alkoxypropylenamin der Formel

$$RO-(CH_2)_3-NH_2$$

in der R die obengenannte Bedeutung besitzt,
mit Formaldehyd und phosphoriger Säure umsetzt.

Die Alkoxipropylendiamine werden erhalten durch Umsetzung der primären, sekundären oder tertiären Alkohole ROH mit Acrylnitril und anschließende Hydrierung der Cyanogruppe. Der Formaldehyd wird in Form wäßriger Lösungen, vorzugsweise mit einer Konzentration von 30—40% oder in fester Form als Paraformaldehyd eingesetzt. Das Molverhältnis der einzelnen Reaktionspartner beträgt 2—4, vorzugsweise 3—4 Mol Formaldehyd und 2 Mol phosphorige Säure auf 1 Mol Alkoxipropylenamin.

Die Herstellung der Verbindungen der allgemeinen Formel I erfolgt durch Mischen von Alkoxipropylenamin, phosphoriger Säure und Formaldehyd und Erhitzen auf Temperaturen über 50° C, vorzugsweise auf Temperaturen zwischen 80 und 110° C. Um optimale Ergebnisse zu erreichen, muß sichergestellt sein, daß der pH-Wert des Reaktionsgemisches unter 4, besser sogar unter 2 ist. Dies wird erreicht durch Zugabe von Säuren, die fähig sind, den pH-Wert zu erniedrigen, ohne störend die Reaktion zu beeinflussen. In Frage kommen hierfür z. B. Salzsäure, Bromwasserstoffsäure, Schwefelsäure, Phosphorsäure und Sulfonsäuren.

Die Reaktion kann direkt in wäßrigem Medium durchgeführt werden, wobei allerdings vor allem die

Phosphonsäuren mit längeren Alkylketten gegen Ende der Reaktion auskristallisieren. Um dies zu verhindern, kann dem Reaktionsgemisch ohne Schaden ein Lösevermittler zugesetzt werden. Als geeignet erwiesen sich polare organische Lösungsmittel, die bei erhöhten Temperaturen mit Wasser mischbar sind, z. B. Alkohole mit kurzen Alkylketten wie n-Propanol, iso-Propanol, iso-Butanol.

Die Alkali-, Erdalkali-, Ammonium- und Amin-Salze erhält man in bekannter Weise durch Neutralisation der wäßrigen Lösungen oder Aufschlämmungen der entsprechenden Phosphonsäuren mit stöchiometrischen Mengen an Basen wie Alkali-, Erdalkalihydroxide, Ammoniak oder Amine wie etwa Mono-, Di- oder Triethanolamin, Diethylentriamin oder Ethylendiamin. Die erhaltenen Salze zeichnen sich meist durch eine bessere Löslichkeit aus im Vergleich zur freien Säure.

Die freien Säuren fallen infolge ihrer relativen Schwerlöslichkeit aus dem Reaktionsgemisch aus und können durch Abfiltrieren isoliert werden. Bei etwas leichter löslichen Säuren empfiehlt es sich, das Reaktionsgemisch einzuengen. Die Salze können direkt in Form ihrer wäßrigen Reaktionslösung weiter verwendet werden. Eine Isolierung der Salze in fester Form kann man durch Sprühtrocknung erreichen.

Die erfindungsgemäßen 3-Alkoxipropylenimino-bis(methylenphosphonsäuren) und deren Salze eignen sich zur Behandlung von Wasser, wo sie eine Steinbildung verhindern und einen Korrosionsschutz bewirken. Weiterhin eignen sie sich als Tenside und Wirkstoffe in Waschmitteln. Bevorzugt werden diese Verbindungen aber als Sammler bei der Flotation von nichtsulfidischen Erzen eingesetzt, beispielsweise solchen, die Wolfram, Niob, Tantal oder Zirkon enthalten. Insbesondere dienen die erfindungsgemäßen Verbindungen jedoch als Sammler bei der Flotation von Zinnstein.

## Beispiele I bis VIII

In einem Kolben, versehen mit Rührer, Rückflußkühler, Thermometer und Tropftrichter werden 200 g 35%ige Salzsäure, 164 g phosphorige Säure, 400 g Wasser und 1 Mol 3-Alkyloxypropylenamin vorgelegt, auf Rückflußtemperatur erhitzt und bei dieser Temperatur während 2 Stunden mit 340 g 35%iger Formaldehyd-Lösung versetzt. Anschließend wird noch 3 Stunden am Rückfluß gekocht. Bei den kurzkettigen Etheraminen wird das Reaktionsgemisch durch Destillation eingeengt. Nach Abkühlen der Lösung auf 10 bis 15° C kristallisieren die 3-Alkyloxypropylenimino-bis(methylenphosphonsäuren) aus, werden abgesaugt und getrocknet.

Nach dieser Verfahrensvorschrift werden die in der folgenden Aufstellung aufgeführten Verbindungen hergestellt.

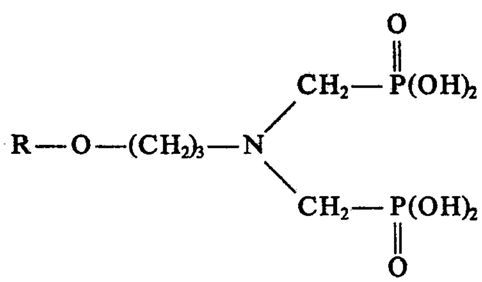

| Beispiel | R | Molmasse des Amins | Produkt Molmasse | Ausbeute g/% | Säurezahl (theoret.) | Schm.P. °C |
|---|---|---|---|---|---|---|
| I | n-Butyl | 131 | 319 | 185/58 | 533 (528) | 201 |
| II | Amyl | 145 | 333 | 206/62 | 499 (504) | 212 |
| III | n-Hexyl | 159 | 347 | 246/71 | 493 (485) | 189 |
| IV | n-Octyl | 193 | 381 | 282/74 | 442 (449) | 210 |
| V | n-Decyl | 228 | 416 | 250/60 | 419 (409) | 238 |
| VI | iso-Nonyl | 210 | 398 | 259/65 | 433 (422) | 236 |
| VII | 2-Ethylhexyl | 187 | 375 | 266/71 | 447 (449) | 218 |
| VIII | ($C_{10/18}$-Alkyl) | 263 | 451 | 203/45 | 366 (373) | 238 |

Zur Verwendung als Flotationssammler für nichtsulfidische Erze können die erfindungsgemäßen Verbindungen sowohl in Form der freien Säure als auch vorzugsweise als wäßrige Lösungen oder Dispersionen in Konzentrationen von 0,1 bis etwa 10% der Flotationstrübe zugegeben werden. Die zur Erzielung eines optimalen Metallausbringens notwendige Menge wird entscheidend von der zum Teil sehr unterschiedlichen Flotierbarkeit der Erze, von der Korngröße und natürlich auch von der Art der begleitenden Gangartminerale bestimmt. Sie kann daher, wie auch in den Beispielen gezeigt werden wird, in weiten Grenzen schwanken. Im allgemeinen kann man im Falle des Zinnsteines mit Zugabemengen von 50 bis 1000 g Sammlersubstanz pro t trockene Flotationsaufgabe rechnen. Von den erwähnten Bedingungen hängt es auch ab, ob die optimale Menge in einer einzigen Portion zu Beginn der Flotation zugegeben oder ob sie in mehreren Portionen über den Flotationskreislauf verteilt wird, wobei die erste Portion üblicherweise größer ist als die folgenden.

Die Adsorption der erfindungsgemäßen Sammler ist normalerweise so spontan, daß man mit Konditionierungszeiten von wenigen Minuten auskommt. Bei schwierig zu flotierenden Erzen können aber längere Einwirkzeiten erforderlich sein. Sie können auch eine Reduzierung des spezifischen Verbrauchs zur Folge haben.

Wie die Flotationsversuche mit den erfindungsgemäßen Sammlern gezeigt haben, ist es nicht erforderlich, bei der Nachreinigung des Vorkonzentrats nochmals Sammler zuzugeben, da die Adsorption an Zinnstein stark genug ist, um mehrere Reinigungsstufen zu überstehen. Diese Feststellung schließt natürlich nicht aus, daß es nicht doch Erze gibt, bei denen auch in den Nachreinigungsstufen noch Sammler zugegeben werden muß.

Die durch die erfindungsgemäßen Sammler auf der Flotationstrübe erzeugte Schaumdecke reicht normalerweise zur Durchführung einer optimalen Flotation aus. Abhängig vom Charakter des Erzes und auch vom Kornspektrum des Erzes, aber auch beeinflußt von der Qualität des zur Flotation zur Verfügung stehenden Wassers oder durch im Erz enthaltene wasserlösliche Salze (Elektrolyte) kann es von Vorteil sein, einen zusätzlichen Schäumer zu verwenden. Die bekanntesten Schäumersubstanzen wurden bereits oben erwähnt. Wenn in den unten aufgeführten Beispielen grundsätzlich eine konstante Menge eines bestimmten Schäumers (Polypropylenglykol) zugesetzt wurde, so geschah dies, um den Einfluß der sehr unterschiedlichen Schaumentwicklung der verschiedenen Sammler auf das Flotationsergebnis zurückzudrängen, d. h., um die originäre Selektivität und Aktivität der Sammler besser hervortreten zu lassen. Die Tatsache, daß hier stets ein Polypropylenglykol verwendet wurde, besagt nicht, daß nicht auch andere Schäumertypen mit den erfindungsgemäßen Sammlern einsetzbar sind. Selbstverständlich können die erfindungsgemäßen Sammler auch ohne zusätzlichen Schäumer verwendet werden.

Wie den folgenden Beispielen zu entnehmen ist, besitzen die erfindungsgemäßen Sammler eine so hohe Selektivität für Zinnstein, daß vielfach auf den Einsatz regelnder Reagenzien, wie Aktivatoren oder Drücker, verzichtet werden kann. Dies schließt aber natürlich nicht aus, daß vor allem Substanzen, die als drückende Reagenzien für die wertlosen Gangartminerale in Betracht kommen, zur Verbesserung der Selektivität der erfindungsgemäßen Sammler eingesetzt werden können. Bei der Flotation von Zinnerzen werden üblicherweise vor allem folgende Substanzen als Gangart-Drücker verwendet: Na-silikat (Natron-Wasserglas), Na-fluorid, Na-silikofluorid, Natriumsalze der Ethylendiamintetraessigsäure, Oxal-, Wein-, Zitronensäure usw. (siehe DDR-Wirtschaftspatent Nr. 94 966 und E. Wottgen: Steigerung der Effektivität der Zinnsteinflotation durch Weiterentwicklung der Reagenzienführung und Anwendung einer Erzvorbehandlung, Freiberger Forschungsheft A 621, 1980). In den folgenden Beispielen, die die Überlegenheit der erfindungsgemäßen Sammler demonstrieren, ist — abgesehen von pH-Wert-Reglern — auf die Verwendung von Gangart-Drückern absichtlich verzichtet worden, um die originäre Aktivität und vor allem Selektivität der erfindungsgemäßen Sammler im Vergleich zu den konventionellen Zinnstein-Sammlern zur Darstellung zu bringen.

Wichtig ist auch eine pH-Wert-Regelung zum Beispiel mittels Schwefelsäure, da vom pH-Wert die Wirksamkeit und Selektivität aller Zinnstein-Sammler, also auch die der erfindungsgemäßen Sammler, entscheidend beeinflußt wird. Bei den zur Prüfung verwendeten Erzen erwies sich in fast allen Fällen ein pH-Wert von etwa 5 als optimal, und zwar sowohl für die Vorflotation als auch für die Nachreinigung der Vorkonzentrate. Nur in einem Fall war es notwendig, den pH-Wert auf 6 anzuheben, um einer bei niedrigeren pH-Werten unangenehmen Schaumentwicklung zu begegnen. In dieser Hinsicht entsprechen die erfindungsgemäßen Sammler den anderen zur Zinnstein-Flotation verwendeten Phosphonsäuren (s. o.); sie unterscheiden sich aber wesentlich und sehr positiv zum Beispiel von den Succinamaten und auch Hydroxamsäuren, die ihre beste Wirkung erst unterhalb von pH 3 entwickeln, in einem sehr sauren Milieu, in dem erhebliche Korrosionsprobleme auftreten. Der obengenannte optimale pH-Wert von 5—6 für die Vorflotation und Nachreinigung der Vor- und Zwischenkonzentrate bezieht sich zunächst auf die geprüften Erze, d. h., es ist durchaus möglich, daß für andere Erze ein niedrigerer oder höherer pH-Wert zweckmäßig sein kann. Es ist auch eine sonst oft geübte Praxis in der Zinnstein-Flotation, die Vorflotation bei einem höheren pH-Wert (zum Beispiel 5) durchzuführen und in den folgenden Nachreinigungsstufen den pH-Wert stufenweise (zum Beispiel bis auf 4) zur Verbesserung der Selektivität zu erniedrigen.

Da in so gut wie allen Zinnerzen auch Sulfidminerale (Schwefelkies $FeS_2$, Magnetkies FeS, Arsenkies, Kupferkies $CuFeS_2$ usw.) anwesend sind, ist es üblich und aus Gründen der Selektivität auch

notwendig, diese vor dem Zinnstein mit den üblichen Sulfhydril-Sammlern (Xanthate, Dithiophosphate usw.) und einem Schäumer zu flotieren. Dieses Verfahren gilt auch für die Zinnstein-Flotation mit den erfindungsgemäßen Sammlern, da sie die Schwermetall- und Buntmetall-haltigen Sulfidminerale ebenfalls wenigstens teilweise hydrophobieren. In den folgenden Beispielen konnte auf die Sulfid-Flotation verzichtet werden, da es sich in allen Fällen um das Original-Aufgabematerial zur Zinnstein-Flotation aus industriellen Flotationsanlagen handelt, der die Sulfid-Flotation vorausgegangen ist. Dieses Original-Aufgabematerial war in allen Fällen auch schon entschlämmt worden.

Zum Vergleich mit den erfindungsgemäßen Sammlern wurden sowohl die konventionellen, im industriellen Gebrauch stehenden Sammler als auch die in chemischer Hinsicht ähnlichen Substanzen gemäß dem oben bereits zitierten UdSSR-Patent Nr. 605 638 herangezogen.

In den folgenden Beispielen wurden sämtliche Sammler der Einfachheit halber als Säuren bezeichnet, obwohl die Produkte in allen Fällen der leichteren Dosierbarkeit wegen als vollneutralisierte Natriumsalze verwendet wurden.

In den Beispielen, Tabellen und Diagrammen werden für die Sammler folgende Bezeichnungen verwendet:

## 1. Vergleichssubstanzen

### 1.1 Konventionelle, industriell eingesetzte Produkte

Sammler A = 2-Phenylethylenphosphonsäure, Styrolphosphonsäure
Sammler B = Tetranatrium-N-(1,2-dicarboxyethyl)-N-octadecyl-sulfosuccinamat
Sammler C = Oleylhydroxamsäure

### 1.2 Produkte gemäß UdSSR-Patent Nr. 605 638

Sammler D = n-Hexylimino-bis-methylenphosphonsäure
Sammler E = n-Octylimino-bis-methylenphosphonsäure
Sammler F = 2-Ethylhexylimino-bis-methylenphosphonsäure
Sammler G = Isononylimino-bis-methylenphosphonsäure
Sammler H = Talgfettalkylimino-bis-methylenphosphonsäure
Sammler I = Oleylimino-bis-methylenphosphonsäure

## 2. Erfindungsgemäße Produkte

Sammler K = n-Butoxypropylenimino-bis-methylenphosphonsäure
Sammler L = n-Hexylpropylenimino-bis-methylenphosphonsäure
Sammler M = n-Octyloxypropylenimino-bis-methylenphosphonsäure
Sammler N = 2-Ethylhexyloxypropylenimino-bis-methylenphosphonsäure
Sammler O = Isononyloxypropylenimino-bis-methylenphosphonsäure
Sammler P = n-Octyl-/n-Decyloxypropylenimino-bis-methylenphosphonsäure
Sammler R = n-Decyloxypropylenimino-bis-methylenphosphonsäure

### Beispiel 1

Flotiert wurde ein südafrikanisches Zinnerz mit einem Zinngehalt von 1,26% in Form eines originalen Flotationsaufgabematerials aus einer industriellen Flotationsanlage, aus dem die Sulfidminerale bereits herausflotiert worden sind und das auch entschlämmt (Abscheidung der Feinstschlämme < 10 µm) worden ist. Das Material wies folgende Kornverteilung auf:

| Korngröße (μm) | Gew.-% |
|---|---|
| +125 | 0,4 |
| 125 — 90 | 2,5 |
| 90 — 63 | 7,1 |
| 63 — 25 | 40,2 |
| — 25 | 49,8 |
| | 100,0 |

Der pH-Wert der Flotationstrübe wurde mit 1%iger Schwefelsäure geregelt und über ein pH-Meter durch automatische Zugabe konstant gehalten. Für alle Phosphonsäuren, also auch für die erfindungsgemäßen Produkte, wurde ein pH-Wert von 5 für die Vorflotation und Reinigungsflotation gewählt. Für den Sammler B mußte der pH-Wert für die Vorflotation auf 3, für die Reinigungsflotation sogar auf 2,5 abgesenkt werden. Für den Sammler C erwies sich sowohl für die Vorflotation als auch für die Reinigungsflotation ein pH-Wert von 3 als optimal.

Alle Sammler wurden in Form der Natriumsalze als 1%ige Lösungen, die mit entsalztem Wasser hergestellt worden waren, verwendet. Die in der Tabelle angegebenen Zugabemengen beziehen sich auf die Wirksubstanz. Für alle Sammler erwies sich eine Konditionierungszeit von einer Minute als ausreichend. Um eine Verzerrung der sammelnden Aktivität durch die unterschiedliche Schaumentwicklung der einzelnen Sammler weitgehend auszuschließen, wurde bei allen Versuchen 30 g/t Polypropylenglykol (1%ige Lösung) als zusätzlicher Schäumer zugegeben. Die Konditionierungszeit für den Schäumer betrug ebenfalls nur eine Minute. Aus schon obengenannten Gründen wurde auf die Zugabe von regelnden Reagenzien verzichtet.

Bei allen Sammlern verlief die Flotation so schnell, daß drei Minuten für die Vorflotation ausreichten. Die erste Reinigungsflotation, die ohne weitere Reagenzienzugabe erfolgte, benötigte nur zwei Minuten. Auf weitere Reinigungsstufen wurde wegen der geringen Konzentratmengen verzichtet.

Zur Flotation wurde eine Denver-Labor-Flotationsmaschine »Sub-A« mit einer 2,5-l-Zelle für die Vorflotation verwendet. Die Reinigungsflotation fand in einer 1-l-Stahlzelle statt.

Die verwendeten Sammler sind der Tabelle 1 zu entnehmen, in der auch die Flotationsergebnisse verzeichnet sind, die auszugsweise, d. h., für die wichtigsten Sammler, graphisch dargestellt sind. Die Graphik (Fig. 1a und 1b) zeigt das Ausbringen des Zinns in Abhängigkeit von der Zugabemenge sowohl für das Vorkonzentrat als auch für das einmal nachgereinigte Konzentrat. Die Zahlenwerte an den Punkten in den Ausbringenskurven bedeuten die Zinn-Gehalte der entsprechenden Konzentrate. Hier, wie auch in den anderen Fig. 2 bis 4, zeigt Fig. a die Ergebnisse bei der Vorflotation und Fig. b die Ergebnisse nach einmaliger Nachreinigung.

Es ist aus Fig. 1a und 1b eindeutig abzulesen, daß der erfindungsgemäße Sammler K alle anderen schon im industriellen Einsatz befindlichen Zinnstein-Sammler A, B und C an Aktivität weit übertrifft, ohne daß darunter die Selektivität leidet.

Der Sammler K ist auch den Alkylimino-bis-methylenphosphonsäuren (Sammler D bis J) überlegen.

## Beispiel 2

Auch für dieses Beispiel wurde das Original-Flotationsaufgabematerial einer südafrikanischen Zinnerz-Aufbereitungsanlage verwendet, das jedoch wesentlich schwieriger zu flotieren war als das Erz aus Beispiel 1. Der Sn-Gehalt betrug 1,0%. Die Flotationsaufgabe besaß folgende Kornverteilung:

| Korngröße (μm) | Gew.-% |
|---|---|
| +90 | 1,0 |
| 90 — 63 | 4,2 |
| 63 — 25 | 37,7 |
| — 25 | 57,1 |
| | 100,0 |

Die Flotationsbedingungen entsprachen dem Beispiel 1, ausgenommen den pH-Wert bei der Vorflotation und der Reinigungsflotation bei Einsatz der erfindungsgemäßen Sammler, der zur Entwicklung eines tragfähigen und auch sonst geeigneten Schaums auf 6 eingestellt werden mußte. Für den wiederum zum Vergleich herangezogenen Sammler A mußte der pH-Wert wie in Beispiel 1 auf 5 einreguliert werden.

Die Ergebnisse sind der Tabelle 2 und der graphischen Darstellung (Fig. 2a und 2b) zu entnehmen. Auch in diesem Fall ist der Sammler K dem Sammler A an Aktivität ohne Selektivitätsverlust überlegen. Besonders auffallend ist der steile Anstieg der Ausbringenskurve für den Sammler K, während die Kurve für den Sammler A sehr flach verläuft. Es läßt sich abschätzen, daß der Verbrauch an Sammler K weniger als die Hälfte des Sammlers A beträgt.

## Beispiel 3

Für dieses Beispiel wurde ein Zinnerz aus Australien gewählt, das einen Gehalt von 1,35% Sn aufwies. Es handelt sich wiederum um die originale Flotationsaufgabe einer industriellen Anlage, die folgendes Kornspektrum aufwies:

| Korngröße (μm) | Gew.-% |
|---|---|
| +90 | 0,3 |
| 90 – 63 | 3,2 |
| 63 – 25 | 32,0 |
| – 25 | 64,5 |
| | 100,0 |

Die Flotationsbedingungen entsprachen genau denen, die im Beispiel 1 beschrieben wurden.

Die Ergebnisse sind in einer Tabelle 3 zusammengefaßt und graphisch dargestellt in Fig. 3a und 3b.

Es ist auch in diesem Fall deutlich zu sehen, daß der erfindungsgemäße Sammler K den Sammler A deutlich an Aktivität übertrifft. Die für die einzelnen Konzentrate festgestellten Sn-Gehalte, die an den entsprechenden Punkten der Ausbringenskurven vermerkt sind, lassen außerdem erkennen, daß die Selektivität des Sammlers K mindestens der des Sammlers A gleichwertig, wenn nicht gar überlegen ist.

Der ebenfalls zum Vergleich herangezogene Sammler B ist zwar noch aktiver als der Sammler K, seine Selektivität ist aber wesentlich geringer, was an den Sn-Gehalten abzulesen ist. Außerdem mußte er bei einem wesentlich niedrigeren pH-Wert (um 2,5) flotiert werden.

## Beispiel 4

In diesem Beispiel werden die Ergebnisse für die Flotation eines englischen Zinnerzes (originales Flotationsaufgabematerial einer industriellen Aufbereitungsanlage) gebracht, das neben einem vergleichsweise niedrigen Sn-Gehalt von 0,52% auch einen so hohen Verwachsungsgrad aufwies, daß es wesentlich feiner aufgemahlen worden war als die in den vorangegangenen Beispielen zitierten Erze. Die Flotationsaufgabe zeigte folgende Kornverteilung:

| Korngröße (μm) | Gew.-% |
|---|---|
| +90 | 1,0 |
| 90 – 63 | 2,3 |
| 63 – 25 | 19,9 |
| – 25 | 76,8 |
| | 100,0 |

Die feinere Körnung der Flotationsaufgabe bedingte — bei den gleichen Flotationsbedingungen wie in den voraufgegangenen Beispielen — eine erheblich höhere Sammlerzugabe, wie der Tabelle 4 und der Graphik (Fig. 4a und 4b) zu entnehmen ist. Für den erfindungsgemäßen Sammler K wurden immerhin 1000 g/t benötigt, um zu einem Sn-Ausbringen von etwas über 60% zu kommen, das bei den voraufgegangenen Erzen schon mit Zugabemengen zwischen 100 und 500 g/t erreicht wurde. Für den Sammler A wurden hier sogar 3000 g/t benötigt. Darüber hinaus ist an den Sn-Gehalten zu erkennen, daß der erfindungsgemäße Sammler K dem Sammler A überlegen ist.

Tabelle 1a

| Reagenz Bezeichnung | | Flot.-aufgabe | Vorkonzentrat | | | Nach einmaliger Nachreinigung Konzentrat | | | Mittelprodukt | | | Abgänge | | |
|---|---|---|---|---|---|---|---|---|---|---|---|---|---|---|
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler A | 450 | 1,31 | 11,0 | 8,17 | 68,2 | 4,0 | 16,9 | 51,8 | 6,9 | 3,1 | 16,4 | 89,0 | 0,47 | 31,9 |
| | 1000 | 1,31 | 17,1 | 5,80 | 76,0 | 8,3 | 9,9 | 62,4 | 8,9 | 2,0 | 13,6 | 82,9 | 0,38 | 24,0 |
| | 1500 | 1,33 | 22,7 | 4,70 | 80,3 | 12,1 | 7,5 | 68,3 | 10,6 | 1,5 | 12,0 | 77,3 | 0,34 | 19,7 |
| Sammler B | 500 | 1,21 | 10,7 | 6,01 | 52,9 | 3,7 | 10,9 | 33,4 | 7,0 | 3,4 | 19,5 | 89,3 | 0,64 | 47,1 |
| | 750 | 1,27 | 17,0 | 5,11 | 68,5 | 7,3 | 8,4 | 48,7 | 9,6 | 2,6 | 19,8 | 83,0 | 0,48 | 31,5 |
| | 1000 | 1,29 | 21,4 | 4,59 | 76,2 | 10,0 | 7,2 | 55,8 | 11,4 | 2,3 | 20,4 | 78,6 | 0,39 | 23,8 |
| Sammler C | 1200 | 1,27 | 12,0 | 7,24 | 68,7 | 3,3 | 15,4 | 40,6 | 8,7 | 4,1 | 28,1 | 88,0 | 0,45 | 31,3 |
| | 1500 | 1,29 | 16,9 | 5,90 | 76,9 | 5,4 | 12,4 | 52,2 | 11,4 | 2,8 | 24,7 | 83,1 | 0,36 | 23,1 |
| | 2300 | 1,30 | 21,6 | 5,01 | 83,1 | 8,2 | 8,9 | 56,5 | 13,3 | 2,6 | 26,7 | 78,4 | 0,28 | 16,9 |
| Sammler D | 500 | 1,24 | 11,4 | 7,33 | 67,3 | 6,0 | 11,1 | 53,9 | 5,4 | 3,1 | 13,4 | 88,6 | 0,46 | 32,7 |
| F | 450 | 1,18 | 12,3 | 4,89 | 51,0 | 3,6 | 8,3 | 25,1 | 8,7 | 3,5 | 25,9 | 87,7 | 0,66 | 49,1 |
| G | 300 | 1,23 | 11,2 | 7,23 | 65,5 | 5,1 | 13,2 | 54,1 | 6,1 | 2,3 | 11,4 | 88,8 | 0,48 | 34,6 |
| E | 300 | 1,28 | 12,9 | 6,72 | 67,9 | 5,3 | 13,6 | 56,0 | 7,7 | 2,0 | 12,0 | 87,1 | 0,47 | 32,1 |
| E | 600 | 1,27 | 15,8 | 4,66 | 58,1 | 8,6 | 6,8 | 46,2 | 7,2 | 2,1 | 11,9 | 84,2 | 0,63 | 41,9 |
| E | 1000 | 1,21 | 20,0 | 3,28 | 54,2 | 12,1 | 4,3 | 43,2 | 7,8 | 1,7 | 11,0 | 80,1 | 0,69 | 45,8 |

Tabelle 1a (Fortsetzung)

| Reagenz Bezeichnung | | Flot.-aufgabe | Vorkonzentrat | | | Nach einmaliger Nachreinigung Konzentrat | | | Mittelprodukt | | | Abgänge | | |
|---|---|---|---|---|---|---|---|---|---|---|---|---|---|---|
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler | | | | | | | | | | | | | | |
| J | 1000 | 1,18 | 11,7 | 5,01 | 49,6 | 4,5 | 8,8 | 33,9 | 7,1 | 2,6 | 15,7 | 88,4 | 0,67 | 50,4 |
| H | 1000 | 1,17 | 10,5 | 4,96 | 44,3 | 3,9 | 8,5 | 27,9 | 6,6 | 2,9 | 16,4 | 89,5 | 0,73 | 55,7 |
| Sammler K | 300 | 1,28 | 12,1 | 7,37 | 69,7 | 5,0 | 14,2 | 55,9 | 7,1 | 2,5 | 13,8 | 87,9 | 0,44 | 30,3 |
| | 500 | 1,30 | 18,0 | 5,58 | 77,3 | 10,2 | 8,3 | 65,3 | 7,8 | 2,0 | 12,0 | 82,0 | 0,36 | 22,7 |
| | 700 | 1,40 | 23,2 | 5,08 | 84,1 | 13,9 | 7,2 | 71,5 | 9,3 | 1,9 | 12,6 | 76,8 | 0,29 | 15,9 |
| Sammler L | 150 | 1,38 | 14,1 | 5,55 | 56,5 | 4,8 | 12,5 | 43,0 | 9,3 | 2,0 | 13,5 | 85,9 | 0,70 | 43,5 |
| | 250 | 1,40 | 19,4 | 4,63 | 64,2 | 9,3 | 8,1 | 54,1 | 10,0 | 1,4 | 10,1 | 80,7 | 0,62 | 35,8 |
| | 350 | 1,33 | 24,0 | 3,57 | 64,6 | 13,9 | 5,3 | 55,4 | 10,1 | 1,2 | 9,1 | 76,0 | 0,62 | 35,5 |
| Sammler M | 100 | 1,24 | 13,6 | 5,24 | 57,4 | 4,3 | 11,7 | 41,0 | 9,2 | 2,2 | 16,4 | 86,5 | 0,61 | 42,6 |
| | 150 | 1,25 | 17,4 | 4,33 | 59,5 | 6,9 | 8,3 | 45,5 | 10,4 | 1,7 | 14,0 | 82,6 | 0,62 | 40,5 |
| | 300 | 1,27 | 23,3 | 3,33 | 60,9 | 11,5 | 5,0 | 46,4 | 11,8 | 1,7 | 14,5 | 76,7 | 0,65 | 39,1 |
| Sammler O | 75 | 1,20 | 10,7 | 6,20 | 55,3 | 3,6 | 14,6 | 43,4 | 7,1 | 2,0 | 11,9 | 89,3 | 0,60 | 44,7 |
| | 120 | 1,20 | 17,6 | 4,33 | 63,5 | 7,8 | 7,9 | 51,2 | 9,8 | 1,5 | 12,3 | 82,4 | 0,53 | 36,5 |
| | 200 | 1,24 | 22,9 | 3,62 | 66,9 | 11,5 | 5,8 | 54,1 | 11,3 | 1,4 | 12,8 | 77,2 | 0,53 | 33,1 |

Tabelle 1a (Fortsetzung)

| Reagenz Bezeichnung | | Flot.-aufgabe | Vorkonzentrat | | | Nach einmaliger Nachreinigung Konzentrat | | | Mittelprodukt | | | Abgänge | | |
|---|---|---|---|---|---|---|---|---|---|---|---|---|---|---|
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler P | 160 | 1,24 | 12,6 | 5,72 | 58,2 | 4,8 | 11,2 | 43,8 | 7,8 | 2,3 | 14,4 | 87,4 | 0,59 | 41,8 |
| | 250 | 1,29 | 18,0 | 4,57 | 63,8 | 8,2 | 7,8 | 49,3 | 9,9 | 1,9 | 14,5 | 82,0 | 0,57 | 36,2 |
| | 400 | 1,27 | 24,2 | 3,53 | 67,2 | 12,3 | 5,5 | 53,1 | 11,9 | 1,5 | 14,7 | 75,8 | 0,55 | 32,8 |
| Sammler R | 180 | 1,15 | 10,6 | 5,21 | 47,9 | 4,1 | 9,6 | 34,4 | 6,4 | 2,4 | 13,5 | 89,4 | 0,67 | 52,1 |
| | 300 | 1,19 | 17,9 | 3,78 | 56,6 | 8,2 | 6,1 | 42,0 | 9,7 | 1,8 | 14,6 | 82,1 | 0,63 | 43,4 |
| | 600 | 1,18 | 23,2 | 3,12 | 61,1 | 11,8 | 4,6 | 45,7 | 11,4 | 1,6 | 15,4 | 76,8 | 0,60 | 38,9 |

Tabelle 2

| Reagenz Bezeichnung | | Flot.-aufgabe | Vorkonzentrat | | | Nach einmaliger Nachreinigung Konzentrat | | | Mittelprodukt | | | Abgänge | | |
|---|---|---|---|---|---|---|---|---|---|---|---|---|---|---|
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler A | 500 | 0,92 | 16,9 | 3,30 | 61,0 | 61,2 | 7,05 | 47,4 | 10,8 | 1,16 | 13,7 | 83,1 | 0,43 | 39,0 |
| | 1000 | 0,95 | 25,0 | 2,59 | 68,4 | 11,9 | 4,38 | 54,8 | 13,2 | 0,98 | 13,6 | 75,0 | 0,40 | 31,6 |
| | 1500 | 0,98 | 31,2 | 2,27 | 72,0 | 17,5 | 3,38 | 60,1 | 13,7 | 0,85 | 11,9 | 68,8 | 0,40 | 28,0 |
| Sammler K | 300 | 0,95 | 17,6 | 3,01 | 55,8 | 9,2 | 4,56 | 44,2 | 8,4 | 1,31 | 11,6 | 82,4 | 0,51 | 44,2 |
| | 500 | 0,88 | 22,9 | 2,61 | 67,7 | 13,5 | 3,59 | 54,9 | 9,4 | 1,20 | 12,8 | 77,1 | 0,37 | 32,3 |
| | 700 | 0,87 | 26,4 | 2,59 | 78,8 | 16,6 | 3,50 | 67,0 | 9,8 | 1,05 | 11,8 | 73,6 | 0,25 | 21,2 |

Tabelle 3

| Reagenz Bezeichnung | | Flot.-aufgabe | Vorkonzentrat | | | Nach einmaliger Nachreinigung Konzentrat | | | Mittelprodukt | | | Abgänge | | |
|---|---|---|---|---|---|---|---|---|---|---|---|---|---|---|
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler A | 1000 | 1,37 | 22,8 | 3,42 | 57,0 | 10,8 | 5,25 | 41,4 | 12,0 | 1,78 | 15,7 | 77,2 | 0,76 | 43,0 |
| | 1500 | 1,36 | 29,6 | 3,11 | 67,4 | 15,7 | 4,44 | 51,1 | 13,9 | 1,60 | 16,3 | 70,4 | 0,63 | 32,6 |
| | 2000 | 1,37 | 33,7 | 2,91 | 71,5 | 18,3 | 4,13 | 55,1 | 15,4 | 1,46 | 16,4 | 66,3 | 0,59 | 28,6 |
| Sammler K | 500 | 1,28 | 22,0 | 3,71 | 63,6 | 12,9 | 5,09 | 51,1 | 9,1 | 1,75 | 12,4 | 78,0 | 0,60 | 36,4 |
| | 700 | 1,23 | 27,8 | 3,06 | 69,4 | 15,8 | 4,26 | 54,8 | 12,0 | 1,49 | 14,6 | 72,2 | 0,52 | 30,6 |
| | 1000 | 1,26 | 37,1 | 2,58 | 76,1 | 21,6 | 3,56 | 60,9 | 15,6 | 1,23 | 15,2 | 62,9 | 0,48 | 23,9 |
| Sammler B | 200 | 1,36 | 23,8 | 3,00 | 44,2 | 6,9 | 4,20 | 21,8 | 17,0 | 1,80 | 22,4 | 76,2 | 1,00 | 55,8 |
| | 250 | 1,44 | 26,3 | 2,68 | 48,9 | 8,0 | 3,10 | 24,0 | 18,3 | 1,96 | 24,9 | 73,7 | 1,00 | 51,1 |
| | 300 | 1,44 | 31,2 | 2,53 | 54,7 | 10,6 | 2,90 | 30,5 | 20,6 | 1,69 | 24,1 | 68,8 | 0,95 | 45,3 |

Tabelle 4

| Reagenz Bezeichnung | | Flot.-aufgabe | Vorkonzentrat | | | Nach einmaliger Nachreinigung | | | | | | | | |
|---|---|---|---|---|---|---|---|---|---|---|---|---|---|---|
| | | | | | | Konzentrat | | | Mittelprodukt | | | Abgänge | | |
| | g/t | Sn % | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% | Gew.-% | Sn-Gehalt-% | Sn-Ausbr.-% |
| Sammler A | 1500 | 0,47 | 19,1 | 1,29 | 50,3 | 4,6 | 2,40 | 23,4 | 14,5 | 0,88 | 26,9 | 80,9 | 0,29 | 49,7 |
| | 2000 | 0,51 | 21,8 | 1,27 | 55,4 | 7,3 | 2,16 | 30,9 | 14,5 | 0,86 | 24,6 | 78,2 | 0,29 | 44,6 |
| | 3000 | 0,51 | 25,7 | 1,25 | 62,4 | 10,8 | 1,91 | 40,0 | 15,0 | 0,77 | 22,4 | 74,3 | 0,26 | 37,6 |
| Sammler K | 600 | 0,52 | 15,1 | 1,58 | 46,0 | 4,7 | 2,62 | 23,7 | 10,4 | 1,11 | 22,2 | 84,9 | 0,33 | 54,1 |
| | 750 | 0,54 | 19,9 | 1,36 | 50,7 | 6,9 | 2,29 | 29,6 | 13,0 | 0,87 | 21,1 | 80,1 | 0,33 | 49,3 |
| | 1000 | 0,54 | 25,8 | 1,30 | 62,6 | 10,3 | 2,09 | 40,3 | 15,5 | 0,77 | 22,3 | 74,2 | 0,27 | 37,4 |

**Patentansprüche**

1. 3-Alkoxipropylenimino-bis(methylenphosphonsäuren) der Formel

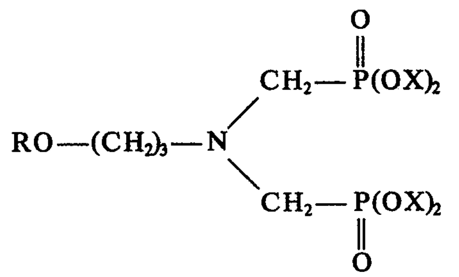

worin R einen geradkettigen oder verzweigten Alkylrest oder Alkenylrest mit jeweils 2 bis 20 C-Atomen, Aryl oder Aralkyl, und X Wasserstoff, ein Alkalimetall-, Erdalkalimetall-, Ammonium-, Alkylammonium- oder Polyalkylenpolyammonium-ion bedeutet.

2. 3-Alkoxipropylenimino-bis(methylenphosphonsäuren) nach Anspruch 1, wobei in der Formel R einen geradkettigen oder verzweigten Alkyl- oder Alkenylrest mit jeweils 2 bis 10 C-Atomen, Phenyl oder Benzyl und X ein Natrium-, Kalium- oder Ammonium-ion bedeutet.

3. Verfahren zur Herstellung der 3-Alkoxipropylenimino-bis(methylenphosphonsäuren) nach Anspruch 1, dadurch gekennzeichnet, daß man eine Verbindung der Formel

$$RO-(CH_2)_3-NH_2,$$

in der R die in Anspruch 1 genannte Bedeutung besitzt, mit Formaldehyd und phosphoriger Säure umsetzt.

4. Verwendung der 3-Alkoxipropylenimino-bis(methylenphosphonsäuren) nach Anspruch 1 als Sammler bei der Flotation von nicht-sulfidischen Erzen.

5. Verwendung der 3-Alkoxipropylenimino-bis(methylenphosphonsäuren) nach Anspruch 1 als Sammler bei der Flotation von Zinnstein.

**Claims**

1. 3-Alkoxypropylenimino-bis-(methylene phosphonic acids) of the formula

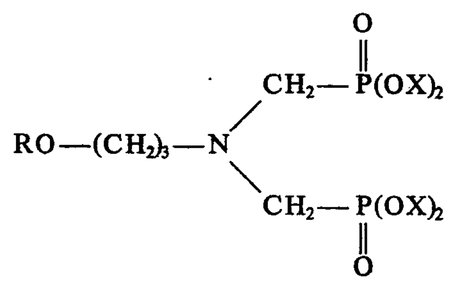

wherein R is straight-chain or branched alkyl of alkenyl each having from 2 to 20 carbon atoms, aryl or aralkyl, and X is hydrogen, an alkali metal, alkaline earth metal, ammonium, alkylammonium or polyalkylene polyammonium ion.

2. The 3-alkoxypropylenimino-bis-(methylene phosphonic acids) of claim 1, wherein R in the formula is straight-chain or branched alkyl or alkenyl each having from 2 to 10 carbon atoms, phenyl or benzyl, and X is a sodium, potassium or ammonium ion.

3. A process for the preparation of the 3-alkoxypropylenimino-bis-(methylene phosphonic acids) of claim 1, which comprises reacting a compound of the formula

$$RO-(CH_2)_3-NH_2$$

wherein R is defined as in claim 1,
with formaldehyde and phosphorous acid.

4. Method of use of the 3-alkoxypropylenimino-bis-(methylene phosphonic acids) of claim 1 as collector in the flotation of non-sulfidic ores.

5. Method of use of the 3-alkoxypropylenimino-bis-(methylene phosphonic acids) of claim 1 as collector in the flotation of tinstone ores.

**Revendications**

1. Acides alcoxcy-3 propylèneimino-bis-(méthylènephosphoniques), caractérisés en ce qu'ils répondent à la formule:

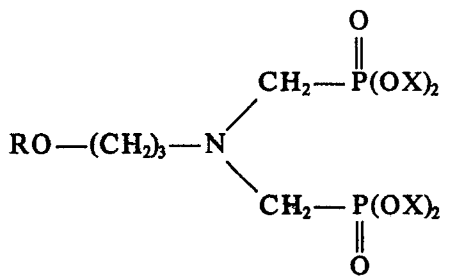

dans laquelle R représente un radical alkyle ou un radical alcényle, linéaire ou ramifié, ayant à chaque fois 2 à 20 atomes de carbone, aryle ou aralkyle, et X représente un atome d'hydrogène, un ion de métal alcalin, de métal alcalino-terreux, ammonium, alkylammonium ou polyalkylènepolyammonium.

2. Acides alcoxy-3 propylèneimino-bis-(méthylènephosphoniques) selon la revendication 1, caractérisés en ce que, dans la formule, R représente un radical alkyle ou alcényle, linéaire ou ramifié ayant à chaque fois 2 à 10 atomes de carbone, phényle ou benzyle, et X représente un ion sodium, potassium ou ammonium.

3. Procédé de préparation d'acides alcoxy-3 propylèneimino-bis-(méthylènephosphoniques) selon la revendication 1, caractérisé en ce qu'on fait réagir un composé de formule

$$RO-(CH_2)_3-NH_2$$

(dans laquelle R a le sens indiqué à la revendication 1) avec du formaldéhyde et de l'acide phosphoreux.

4. Utilisation des acides alcoxy-3 propylèneimino-bis-(méthylènephosphoniques) selon la revendication 1 comme collecteurs dans la flottation des minerais non sulfurés.

5. Utilisation des acides alcoxy-3 propylèneimino-bis-(méthylènephosphoniques) selon la revendication 1 comme collecteurs dans la flottation de la cassitérite.

FIG. 1a

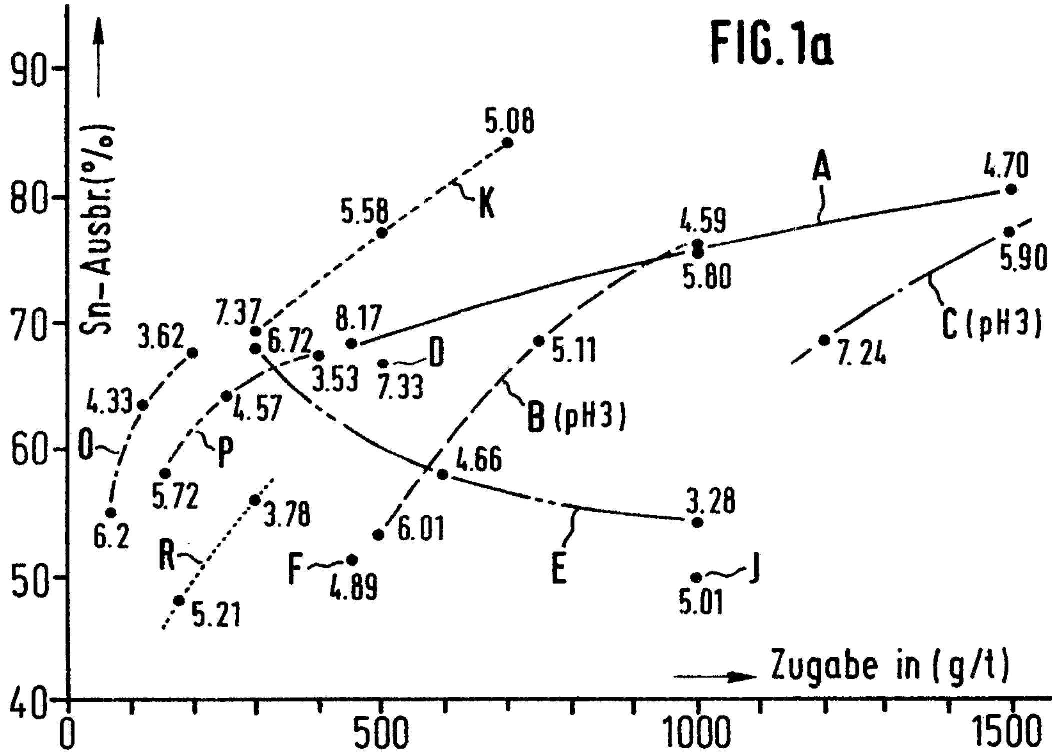

Sn-Ausbr.(%)
Zugabe in (g/t)
90
80
70
60
50
40
0
500
1000
1500
5.08
K
5.58
A
4.70
4.59
5.90
5.80
C (pH3)
7.37
8.17
3.62
6.72
D
5.11
7.24
3.53
7.33
4.33
4.57
B (pH3)
O
P
4.66
5.72
3.28
3.78
6.2
6.01
R
F
4.89
E
J
5.01
5.21


FIG. 1b

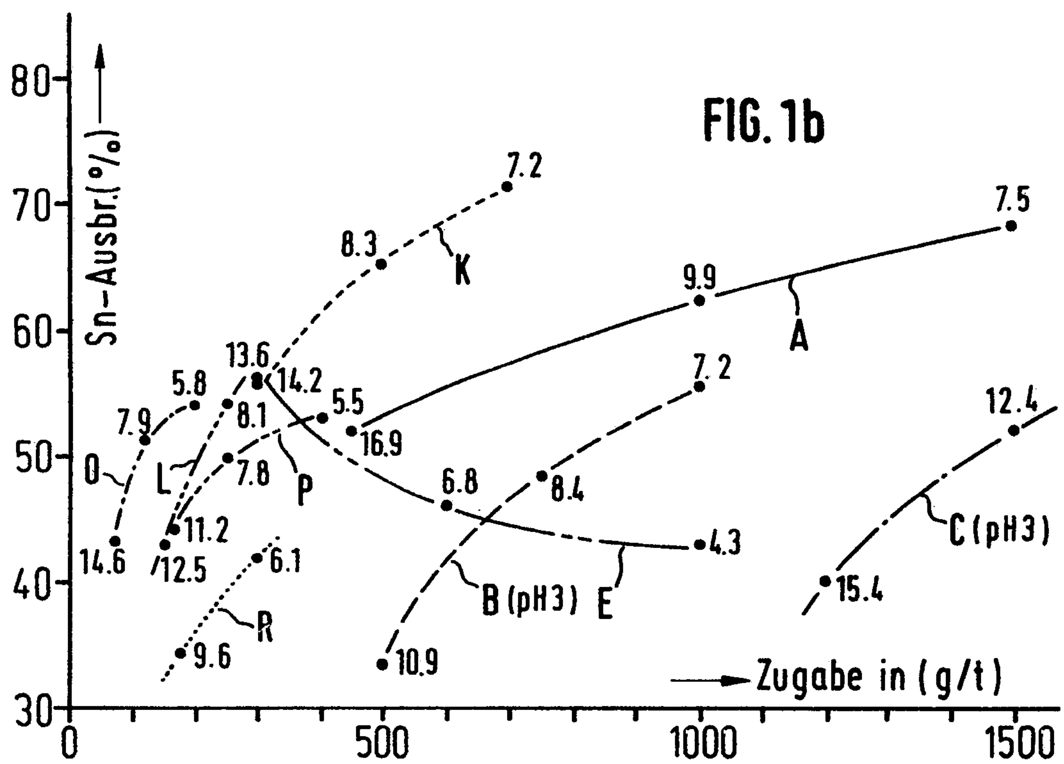

Sn-Ausbr.(%)
Zugabe in (g/t)
80
70
60
50
40
30
0
500
1000
1500
7.2
7.5
8.3
K
9.9
A
13.6
7.2
5.8
14.2
5.5
12.4
7.9
8.1
16.9
O
L
7.8
P
6.8
8.4
C (pH3)
11.2
4.3
14.6
12.5
6.1
15.4
R
B (pH3)
E
9.6
10.9

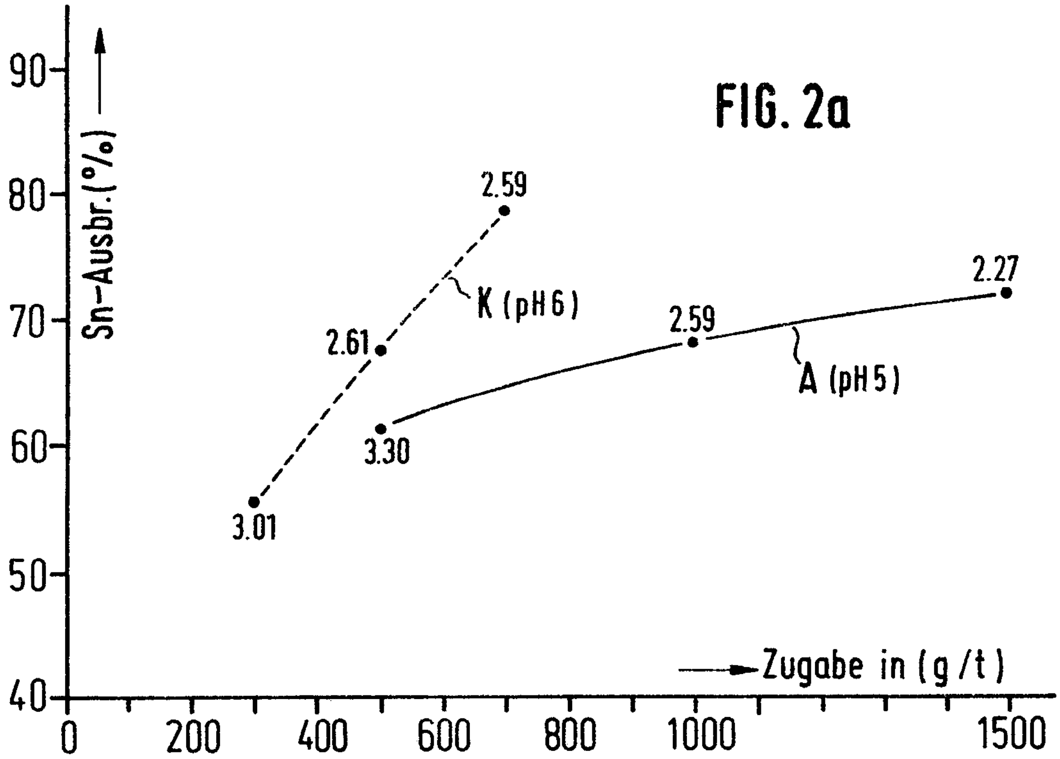
Sn-Ausbr. (%)
90
80
70
60
50
40
2.59
K (pH6)
2.61
3.01
3.30
2.59
2.27
A (pH5)
Zugabe in (g/t)
0
200
400
600
800
1000
1500

FIG. 2a

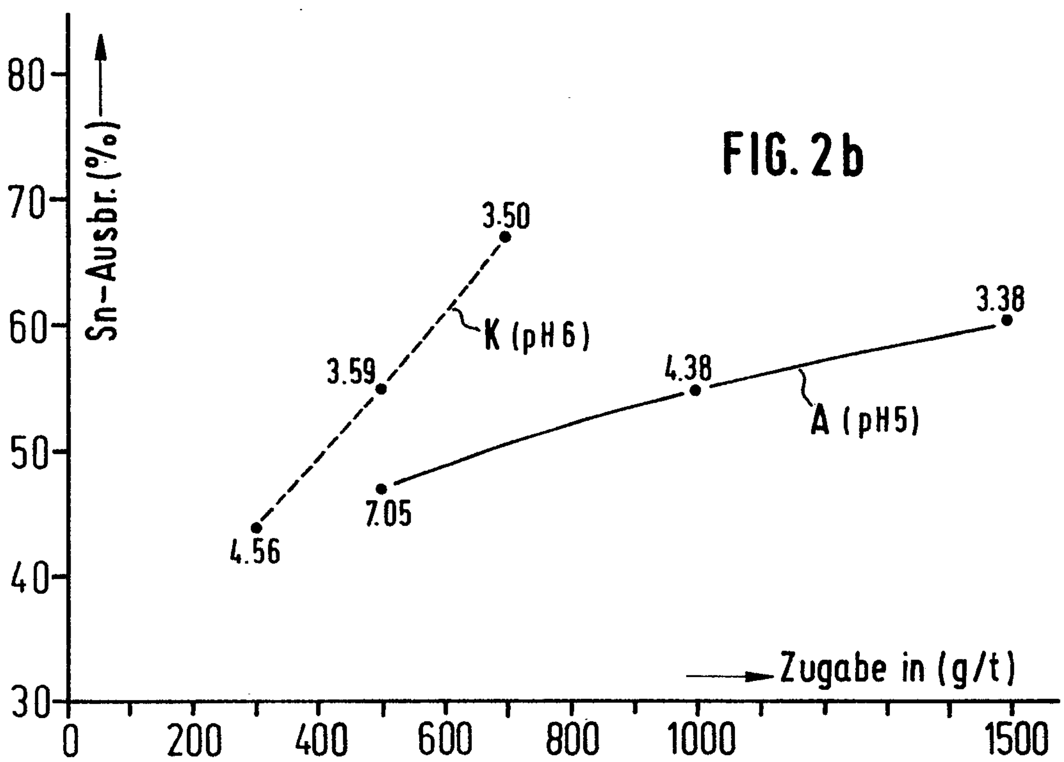
Sn-Ausbr. (%)
80
70
60
50
40
30
3.50
K (pH6)
3.59
4.56
7.05
4.38
3.38
A (pH5)
Zugabe in (g/t)
0
200
400
600
800
1000
1500

FIG. 2b

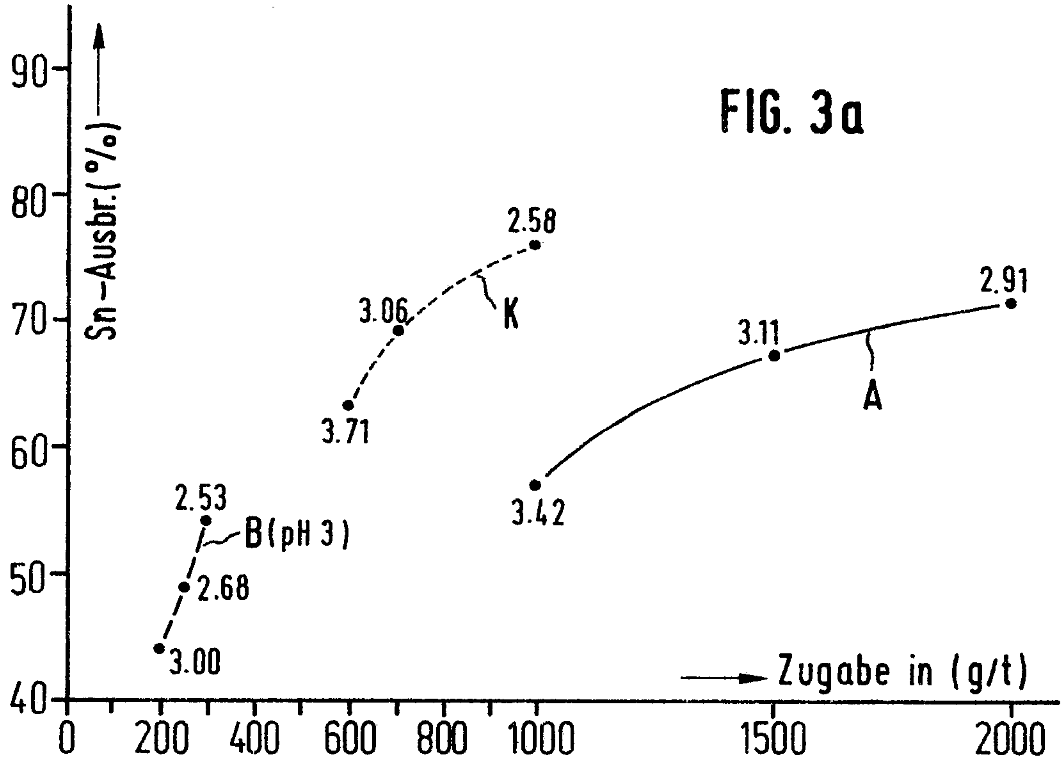
90
80
70
60
50
40
Sn-Ausbr.(%)
2.58
3.06
K
3.71
2.91
3.11
A
3.42
2.53
B(pH 3)
2.68
3.00
Zugabe in (g/t)
0
200
400
600
800
1000
1500
2000

FIG. 3a

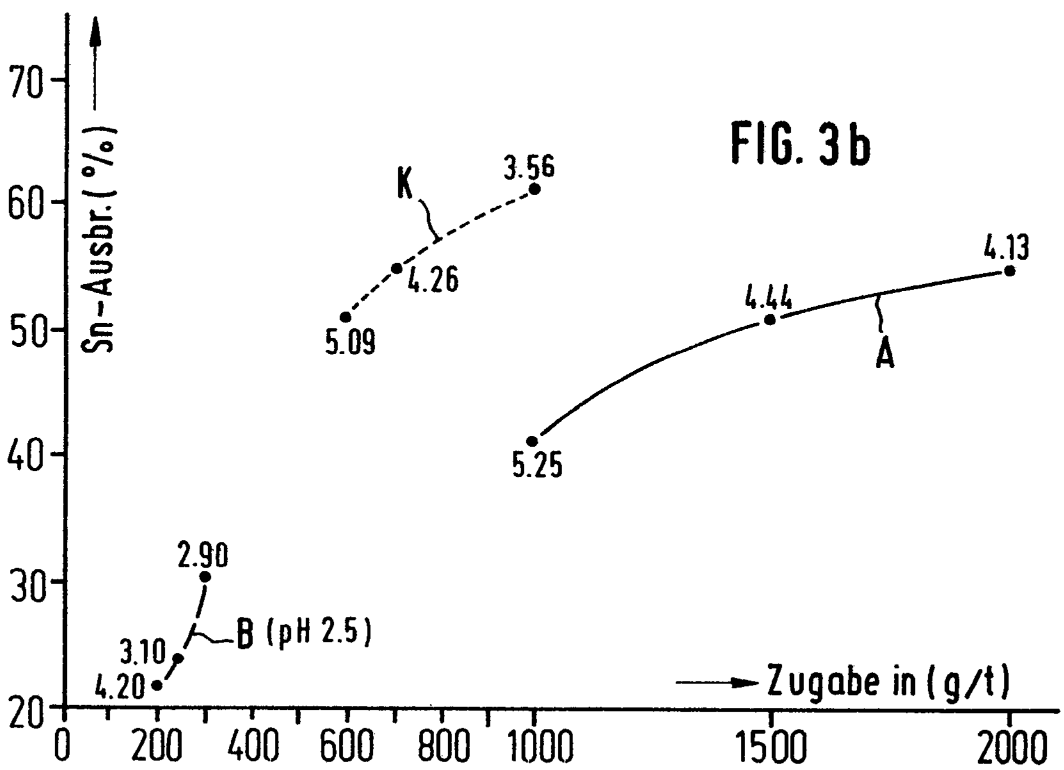
70
60
50
40
30
20
Sn-Ausbr.(%)
K
3.56
4.26
5.09
4.13
4.44
A
5.25
2.90
3.10
B (pH 2.5)
4.20
Zugabe in (g/t)
0
200
400
600
800
1000
1500
2000

FIG. 3b

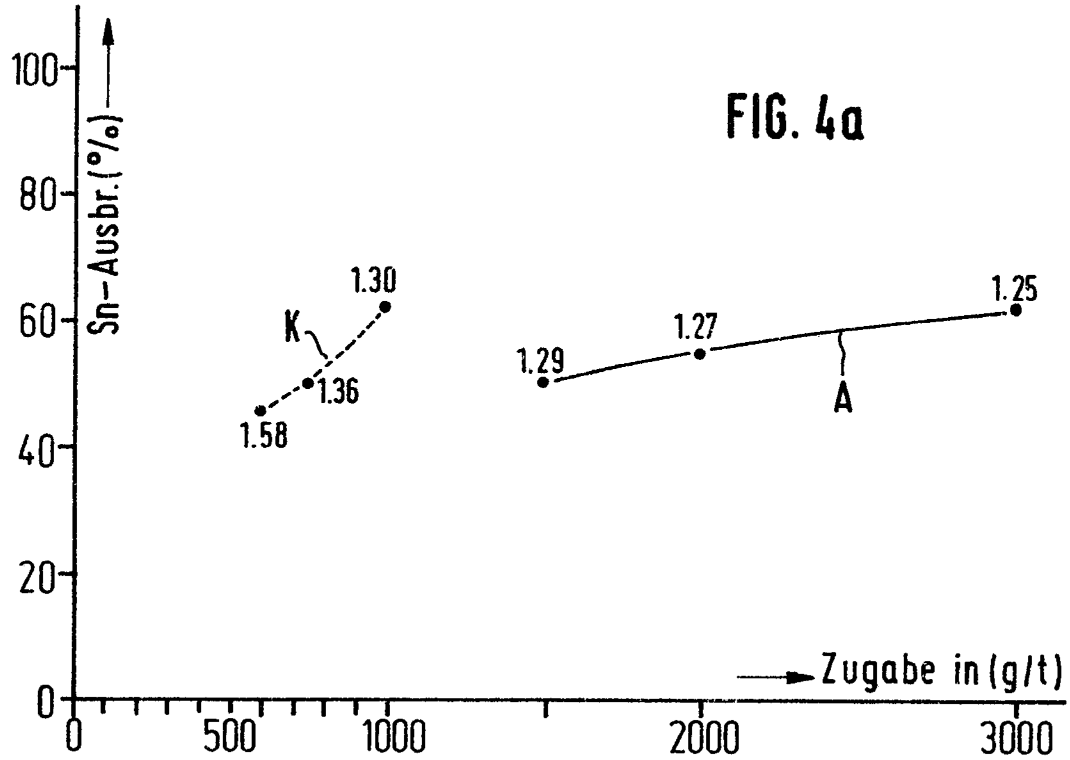
100
80
60
40
20
0
Sn-Ausbr.(%)
K
A
1.30
1.36
1.58
1.29
1.27
1.25
Zugabe in (g/t)
0
500
1000
2000
3000

FIG. 4a

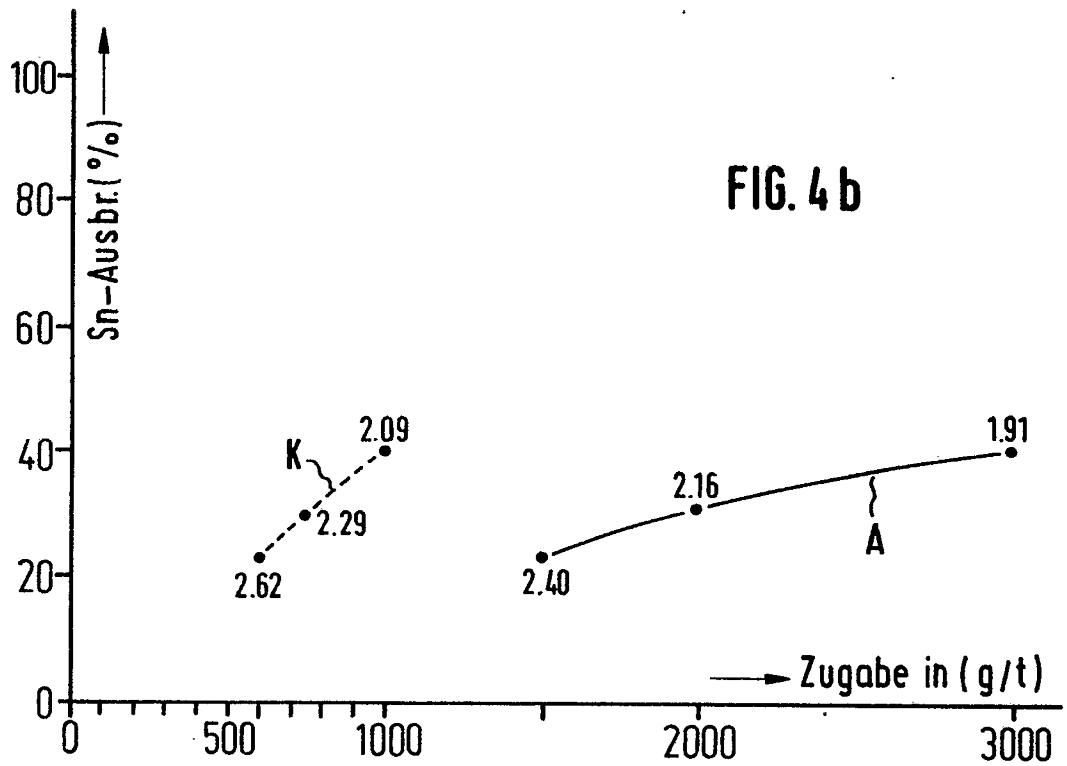
100
80
60
40
20
0
Sn-Ausbr.(%)
K
A
2.09
2.29
2.62
2.40
2.16
1.91
Zugabe in (g/t)
0
500
1000
2000
3000

FIG. 4 b